# EUROPEAN PATENT APPLICATION

(11) **EP 3 188 007 A1**
(43) Date of publication of application: **05.07.2017**
(21) Application number: 16207172.4
(22) Date of filing: 28.12.2016
(51) Int. Cl.: G06F 9/44

(54) **METHOD AND DEVICE FOR SWITCHING APPLICATION INTERFACES**

(30) Priority: 30.12.2015 CN 201511020581
(71) Applicant: Xiaomi Inc., Beijing 100085 (CN)
(72) Inventor: WANG, Shujie, Haidian District, Beijing 100085 (CN); SUN, Nian, Haidian District, Beijing 100085 (CN); WU, Junzhou, Haidian District, Beijing 100085 (CN)
(74) Representative: Kudlek, Franz Thomas

(57) **Abstract**

The present disclosure relates to a method and a device for switching application interfaces. The method includes: receiving (S101, S501) an interface switching request with respect to a target application, the interface switching request being used to request the target application to be switched from a current display interface to a target display interface; acquiring (S102, S502) first interface data for generating the target display interface in response to the interface switching request; generating (S103, S503) a lite interface and switching (S104, S504) from the current display interface to the lite interface through a preset transition animation during acquisition of the first interface data; generating (S105, S507) the target display interface based on the first interface data when the first interface data is acquired completely; and substituting (S106) the target display interface for the lite interface. In this way, an interface switching process is optimized, switching time is shortened, switching speed is increased, and user experience is improved.

## Description

### TECHNICAL FIELD

The present disclosure relates to the field of smart terminals, and more particularly, to a method and a device for switching application interfaces.

### BACKGROUND

When a smart terminal device is used, application interfaces may be generally switched through a click or slide operation. A process for switching interfaces in related art may be as follows. An interface switching request from a user is received by an operation system of the smart terminal device. Interface data for generating a target interface is loaded from the application by the system in response to the interface switching request. The target interface is generated based on the interface data once the interface data is loaded completely. Thereafter, the application is switched from a current interface to the target interface through a transition animation. As can be seen from the process above, the interface cannot be switched until the interface data is loaded completely in related art. Moreover, the time needed for the application to be switched from the current interface to the target interface (abbreviated as "interface switching time") equals to a sum of the time for the system to respond to the interface switching request, the time for loading the interface data and the time for running the transition animation. Accordingly, when the time for loading the interface data is relatively long, the interface switching time may be extended and, thus, the application may be frozen at the current interface within a relatively long period, causing poor user experience.

### SUMMARY

Accordingly, the present disclosure provides a method and a device for switching application interfaces in accordance with the claims appended.

According to a first aspect of the present invention, a method for switching application interfaces is provided. The method includes: receiving an interface switching request with respect to a target application, the interface switching request being used to request the target application to be switched from a current display interface to a target display interface; acquiring first interface data for generating the target display interface in response to the interface switching request; generating a lite interface and switching from the current display interface to the lite interface through a preset transition animation during acquisition of the first interface data; generating the target display interface based on the first interface data when the first interface data is acquired completely; and substituting the target display interface for the lite interface. The term "lite interface" shall especially include interfaces which differ from the current display interface and, for example, comprise an indication of the target interface. Such an indication can, for example, comprise a suitable name or title of the target interface.

According to some embodiments of the first aspect, the acquiring first interface data for generating the target display interface includes: acquiring, with high priority, data related to a theme of the target display interface among the first interface data.

According to some embodiments of the first aspect, the generating a lite interface includes: generating the lite interface based on the acquired data related to the theme of the target display interface.

According to some embodiments of the first aspect, the generating a lite interface includes: acquiring a configuration file with respect to the target application, the configuration file including preset second interface data; and generating the lite interface based on the second interface data in the configuration file.

According to some embodiments of the first aspect, the acquiring a configuration file with respect to the target application includes: acquiring the configuration file corresponding to a latest version of the target application.

According to some embodiments of the first aspect, the method further includes: generating an intermediate interface based on acquired part of the first interface data, during the acquisition of the first interface data, after switching to the lite interface. Moreover, the substituting the target display interface for the lite interface includes: substituting the intermediate interface for the lite interface; and substituting the target display interface for the intermediate interface when the target display interface is generated.

According to a second aspect of the present invention, a device for switching application interfaces is provided. The device for switching application interfaces includes: a reception module configured to receive an interface switching request with respect to a target application, the interface switching request being used to request the target application to be switched from a current display interface to a target display interface; an acquisition module configured to acquire first interface data for generating the target display interface in response to the interface switching request; a lite interface generation module configured to generate a lite interface during acquisition of the first interface data; a switch module configured to switch from the current display interface to the lite interface through a preset transition animation during acquisition of the first interface data; a target display interface generation module configured to generate the target display interface based on the first interface data when the first interface data is acquired completely; and a substitution module configured to substitute the target display interface for the lite interface.

According to some embodiments of the second aspect, the acquisition module includes: a first acquisition submodule configured to acquire, with high priority, data related to a theme of the target display interface among the first interface data.

According to some embodiments of the second aspect, the lite interface generation module includes: a first lite interface generation submodule configured to generate the lite interface based on the acquired data related to the theme of the target display interface.

According to some embodiments of the second aspect, the lite interface generation module includes: a second acquisition submodule configured to acquire a configuration file with respect to the target application, the configuration file including preset second interface data; and a second lite interface generation submodule configured to generate the lite interface based on the second interface data in the configuration file.

According to some embodiments of the second aspect, the second acquisition submodule is configured to acquire the configuration file corresponding to a latest version of the target application.

According to some embodiments of the second aspect, the device further includes: an intermediate interface generation submodule configured to generate an intermediate interface based on acquired part of the first interface data, during the acquisition of the first interface data, after switching to the lite interface. Moreover, the substitution module includes: a first substitution submodule configured to substitute the intermediate interface for the lite interface; and a second substitution submodule configured to substitute the target display interface for the intermediate interface when the target display interface is generated.

According to a third aspect of the present invention, an apparatus for switching application interfaces is provided. The apparatus for switching application interfaces includes: a processor; and a memory configured to store instructions executable by the processor. Herein, the processor is configured to perform: receiving an interface switching request with respect to a target application, the interface switching request being used to request the target application to be switched from a current display interface to a target display interface; acquiring first interface data for generating the target display interface in response to the interface switching request; generating a lite interface and switching from the current display interface to the lite interface through a preset transition animation during acquisition of the first interface data; generating the target display interface based on the first interface data when the first interface data is acquired completely; and substituting the target display interface for the lite interface.

According to a fourth aspect of the present invention, there is provided a computer program which, when being executed on a processor of a smart terminal device, performs any one of the above methods.

The technical solution provided by the embodiments of the present disclosure may achieve, at least in part, the following beneficial effects.

The interface switching request with respect to the target application is received and used to request the target application to be switched from the current display interface to the target display interface; the first interface data for generating the target display interface is acquired in response to the interface switching request; the lite interface is generated and the current display interface is switched to the lite interface through the preset transition animation during acquisition of the first interface data; the target display interface is generated based on the first interface data when the first interface data is acquired completely; and the target display interface is substituted for the lite interface. In this way, a problem in related art, that is, the interface switching time is relatively long, can be overcome through adoption of the technical solution described above. Furthermore, process for loading interface data of the target display interface can be performed in parallel with switch of the transition animation, such that the process for switching interfaces is optimized, the switching time is shorten, the switching speed is increased (by around 30% in general), and the user experience is improved.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flowchart illustrating a method for switching application interfaces according to an exemplary embodiment.
FIGs. 2A-2C are schematic diagrams illustrating interfaces of a smart terminal device in applying a method for switching interfaces according to related art.
FIGs. 3A-3C are schematic diagrams illustrating interfaces of a smart terminal device in applying the method according to the embodiment of FIG. 1.
FIG. 4 is a flowchart illustrating a method for switching application interfaces according to another exemplary embodiment.
FIG. 5 is a flowchart illustrating a method for switching application interfaces according to another exemplary embodiment.
FIGs. 6A-6D are schematic diagrams illustrating interfaces of a smart terminal device in applying the method according to the embodiment of FIG. 5.
FIG. 7 is a block diagram illustrating a device for switching application interfaces according to an exemplary embodiment.
FIG. 8 is a block diagram illustrating a device for switching application interfaces according to another exemplary embodiment.
FIG. 9 is a block diagram illustrating a device for switching application interfaces according to another exemplary embodiment.
FIG. 10 is a block diagram illustrating a device for switching application interfaces according to another exemplary embodiment.
FIG. 11 is a block diagram illustrating an apparatus for switching application interfaces according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

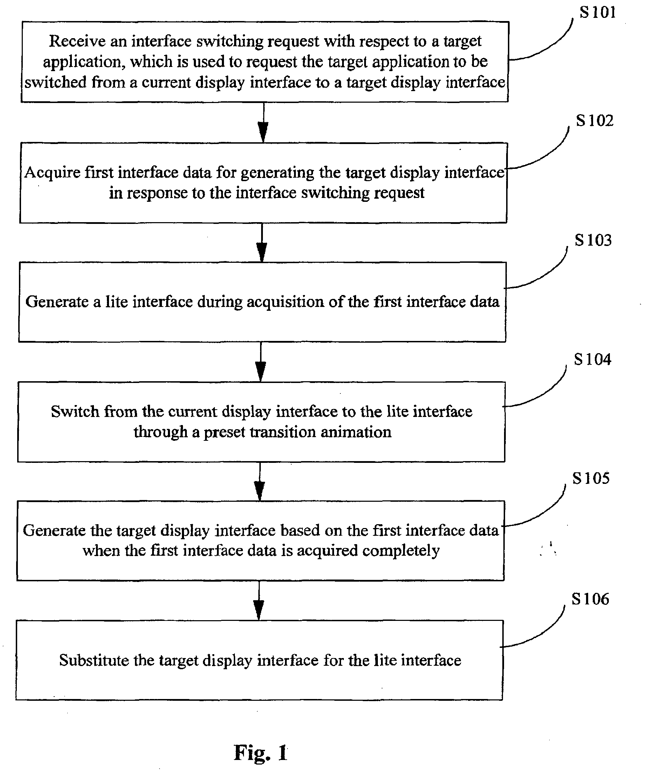

FIG. 1 is a flowchart illustrating a method for switching application interfaces according to an exemplary embodiment. The method is applicable in a smart terminal device, for example, a smart cellphone, a tablet computer and the like, which can support operation systems such as Android™ and IOS™. As shown in FIG. 1, the method includes following steps.

In step S101, an interface switching request with respect to a target application is received. Herein, the interface switching request is used to request the target application to be switched from a current display interface to a target display interface.

The target application may be any application running on the smart terminal device, including system applications or third party applications. The interface switching request, which is indicative of a target display interface as desired by the user, may be initiated by a user performing a click or slide operation on a current display interface of the target application. The interface switching request can be captured in real time by the operation system of the smart terminal device.

In step S102, first interface data for generating the target display interface is acquired in response to the interface switching request.

After the interface switching request is received, the first interface data can be acquired from the target application by the operation system of the smart terminal device in response to the interface switching request.

In step S103, a lite interface is generated during acquisition of the first interface data.

In an exemplary embodiment, the lite interface is generated as the acquisition of the first interface data is started. Alternatively, in another exemplary embodiment, the lite interface is generated when part of the first interface data is already acquired.

Moreover, a preset lite interface may be generated as the lite interface. Alternatively, in another embodiment, the lite interface can be generated based on the acquired part of the first interface data. In this way, the generated lite interface may resemble the target display interface closely and, thus, user experience can be improved.

In step S104, the current display interface is switched to the lite interface through a preset transition animation during acquisition of the first interface data. In this way, the current display interface is firstly switched to the lite interface.

In step S105, the target display interface is generated based on the first interface data when the first interface data is acquired completely.

In step S106, the target display interface is substituted for the lite interface.

So far, the switch process from the current display interface to the target display interface is completed. During the switch process, the switch to the target display interface using the transition animation is started without completely acquiring the first interface data by the operation system of the smart terminal device. Instead, the lite interface is generated and the current display interface is switched to the lite interface via the transition animation during acquisition of the first interface data. At the same time, the first interface data is acquired continuously, and when it is acquired completely, the target display interface is generated and, accordingly, substituted for the lite interface. In this way, generation of the target display interface and switch of the transition animation can be performed parallelly rather than serially in related art. Accordingly, the interface switching time equals to: "time for the system responding to the interface switching request" + "MAX (time for loading the first interface data, time for running the transition animation)". Herein, MAX (time for loading the first interface data, time for running the transition animation) may be indicative of maximum one of the time for loading the first interface data and the time for running the transition animation.

In conclusion, a problem in related art, that is, the interface switching time is relatively long, can be overcome through adoption of the technical solution described above. Furthermore, process for loading interface data of the target display interface can be performed in parallel with switch of the transition animation, such that the process for switching interfaces is optimized, the switching time is shorten, the switching speed is increased (by around 30% in general), and the user experience is improved.

In an alternative embodiment, the acquisition of the first interface data for generating the target display interface includes acquiring, with high priority, data related to a theme of the target display interface among the first interface data. In that case, the generation of the lite interface (i.e., step S103) may include generating the lite interface based on the acquired data related to the theme of the target display interface.

In an embodiment, the data related to the theme of the target display interface includes, for example, data related to a background of the target display interface and data related to a style of Action Bar at the top of the target display interface. Through analysis of the data, the background of the target display interface and the style of Action Bar at the top of the target display interface (e.g., a color of Action Bar, with/without Title, font and position of Title, and so on) can be obtained and the lite interface can be generated thereby. As the lite interface includes the style of Action Bar at the top of the target display interface as well as the background of the target display interface, the lite interface resembles the target display interface closely and, thus, user experience can be improved. Moreover, the data related to the theme of the target display interface may have a small data size in general. Accordingly, when this part of data is acquired with high priority and the lite interface is generated based thereon, a generation speed of the lite interface can be improved, it can be quickly switched to the lite interface and, thus, the user experience can be further improved.

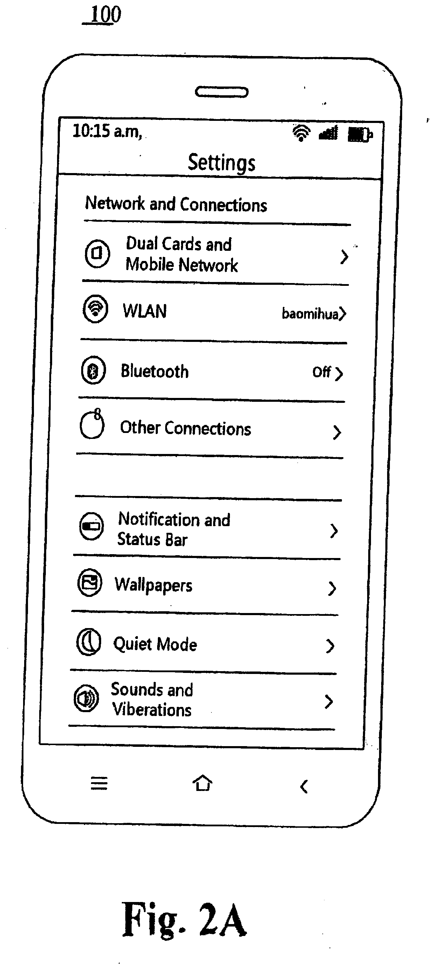

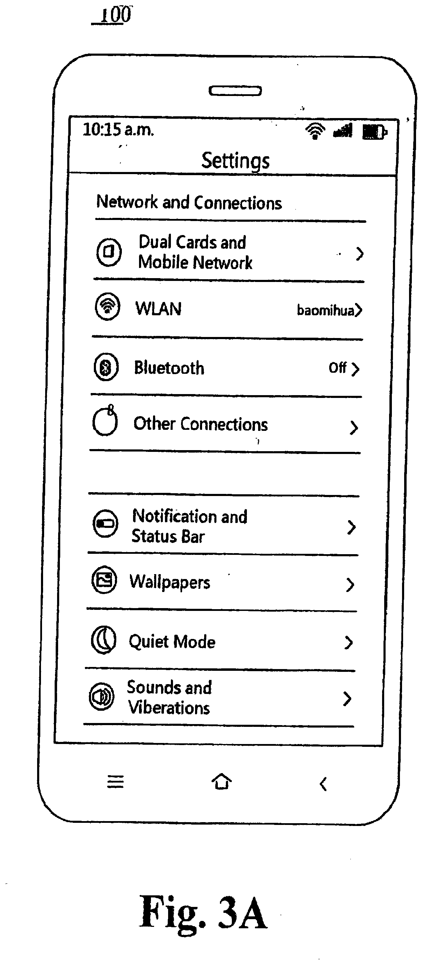

FIGs. 2A-2C are schematic diagrams illustrating interfaces of a smart terminal device in applying a method for switching interfaces according to related art. FIGs. 3A-3C are schematic diagrams illustrating interfaces of a smart terminal device in applying the method according to the embodiment of FIG. 1.

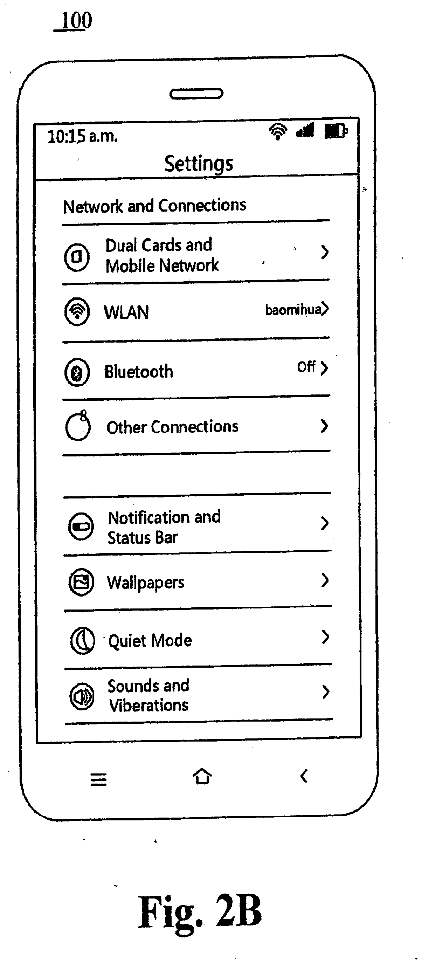

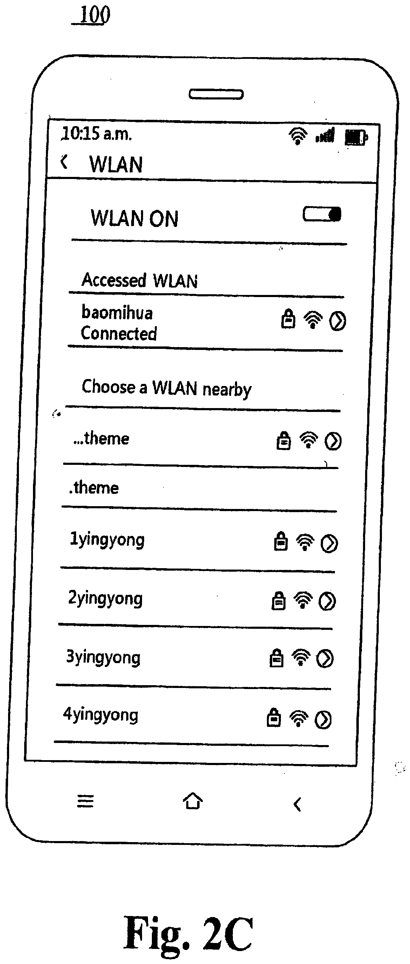

Firstly, a current display interface of the target application is as shown in FIGs. 2A and 3A. As a method for switching interfaces in related art is implemented, when an option of "WLAN" is clicked by a user, the smart terminal device 100 may be kept at the current display interface, as shown in FIG. 2B, during generation of the target display interface. When the target display interface is generated, the current display interface is switched to the target display interface via a transition animation, as shown in FIG. 2C.

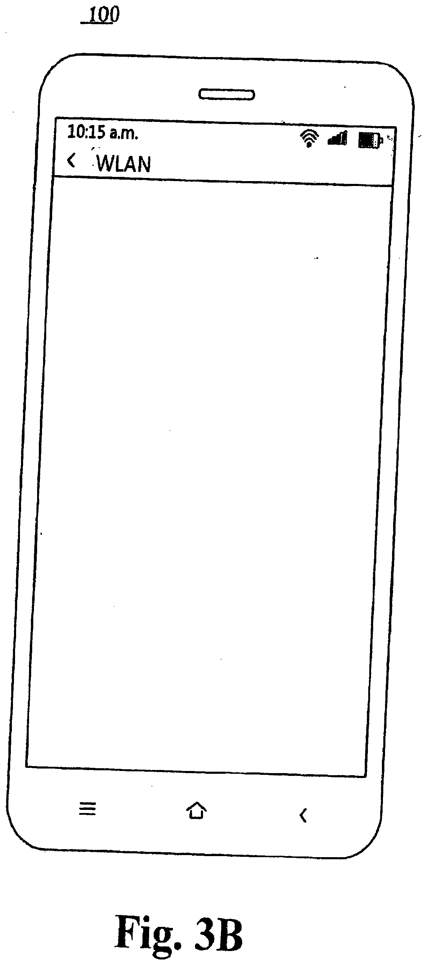

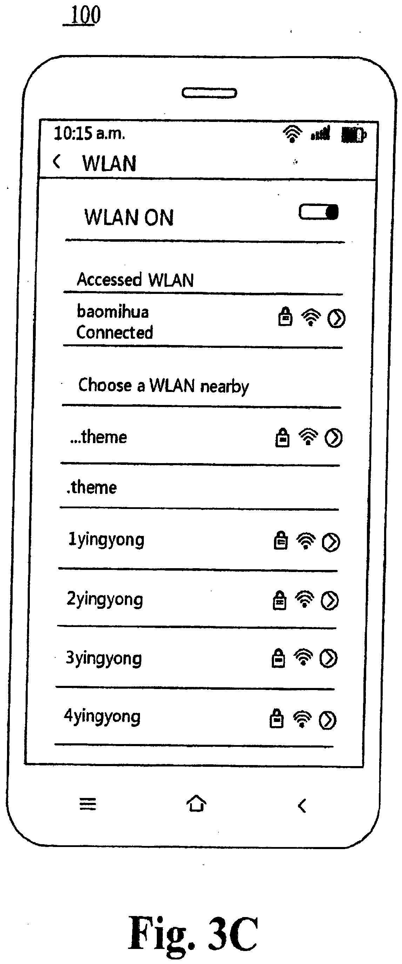

As the method according to the embodiment of FIG. 1 is implemented, when the option of "WLAN" is clicked by a user, a lite interface is firstly generated by the smart terminal device 100 during generation of the target display interface and, as shown in FIG. 3B, the current display interface is switched to the lite interface via a transition animation. When the target display interface is generated, the lite interface is switched to the target display interface, as shown in FIG. 3C.

As can be seen from a comparison between FIGs. 2B and 3B, according to the method provided by the embodiment of FIG. 1, it can be firstly switched to the lite interface instead of being kept at the current display interface. Therefore, interface switch may be visually regarded by the user as being completed and, thus, user experience can be improved.

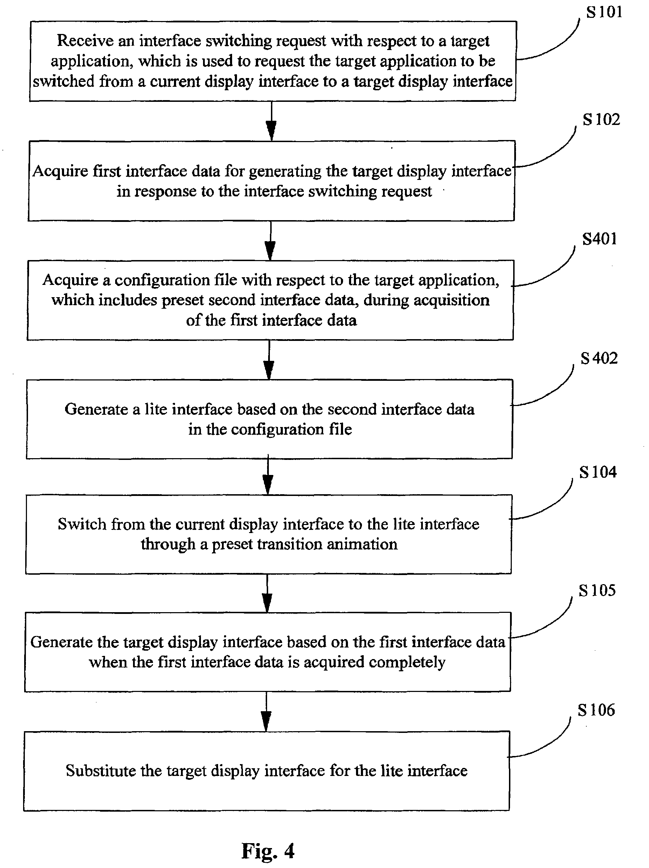

FIG. 4 is a flowchart illustrating a method for switching application interfaces according to another exemplary embodiment. The method is applicable in a smart terminal device, for example, a smart cellphone, a tablet computer and the like, which can support operation systems such as Android™ and IOS™. As shown in FIG. 4, based on the method as shown in FIG. 1, the generation of the lite interface (i.e., step S103) may include following steps.

In step S401, a configuration file with respect to the target application, which may include preset second interface data, is acquired.

The configuration file with respect to the target application may be acquired by the smart terminal device from, for example, a manufacturer server of the smart terminal device. In an embodiment, the configuration file includes therein the second interface data predefined between the smart terminal device and the target application, which can be used for generating a complete interface.

In step S402, the lite interface is generated based on the second interface data in the configuration file.

According to this embodiment, the lite interface predefined by the target application can be generated. The configuration file may be provided therein with the second interface data related to the lite interface as desired. Thus, it can be switched to any lite interface as desired.

In an embodiment, the configuration file of the target application can be updated, for example, by the manufacturer of the smart terminal device according to actual need, and stored with an updated version in the server. In that case, acquisition of the configuration file with respect to the target application (i.e., step S401) may include acquiring the configuration file corresponding to a latest version of the target application.

In an embodiment, when the configuration file with respect to the target application is updated in the manufacturer server of the smart terminal device, an update message, which is indicative of updated status of the configuration file with respect to the target application, can be sent to the smart terminal device from the server. When the update message is received at the smart terminal device, a latest version of the configuration file can be acquired locally from the server.

In another embodiment, a version message request, which is used to request a version number corresponding to the latest version of the configuration file with respect to the target application, can be sent from the smart terminal device to its manufacturer server. In response to the version message request, the version number corresponding to the latest version of the configuration file with respect to the target application, which is stored at the server, can be transmitted to the smart terminal device. When the version number is received by the smart terminal device, it can be compared with a version number of the configuration file stored locally. If those two version numbers are the same, the configuration file stored locally can be used to generate the lite interface. If they are different, the latest version of configuration file with respect to the target application can be acquired from the server and, thereafter, can be used to generate the lite interface.

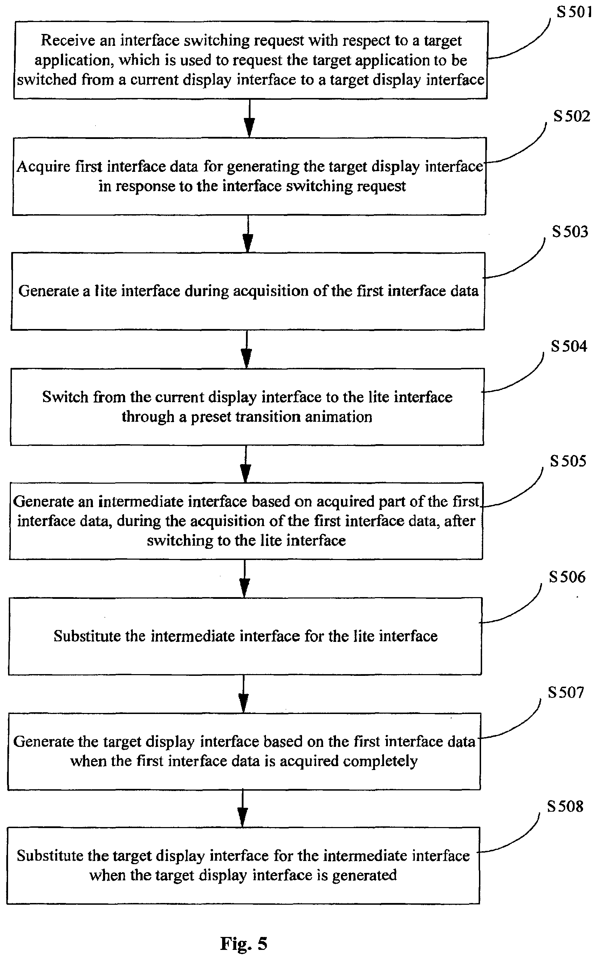

FIG. 5 is a flowchart illustrating a method for switching application interfaces according to another exemplary embodiment. The method is applicable in a smart terminal device, for example, a smart cellphone, a tablet computer and the like, which can support operation systems such as Android™ and IOS™. As shown in FIG. 5, the method includes following steps.

In step S501, an interface switching request with respect to a target application is received. Herein, the interface switching request is used to request the target application to be switched from a current display interface to a target display interface.

In step S502, first interface data for generating the target display interface is acquired in response to the interface switching request.

In step S503, a lite interface is generated during acquisition of the first interface data.

In step S504, the current display interface is switched to the lite interface through a preset transition animation during acquisition of the first interface data.

In step S505, an intermediate interface is generated based on acquired part of the first interface data, during the acquisition of the first interface data, after switching to the lite interface.

In step S506, the intermediate interface is substituted for the lite interface.

In step S507, the target display interface is generated based on the first interface data when the first interface data is acquired completely.

In step S508, the target display interface is substituted for the intermediate interface when the target display interface is generated.

During switch from the lite interface to the target display interface, the first interface data may be still acquired by the smart terminal device. Therefore, through adoption of the embodiment of FIG. 5, the intermediate interface can be generated by the smart terminal device based on the acquired part of first interface data (including the first interface data that has been acquired before and after switching to the lite interface) during the switch from the lite interface to the target display interface and, then, can be displayed between the lite interface and the target display interface. In this way, the target display interface can be displayed gradually and dynamically, thus user experience can be further improved.

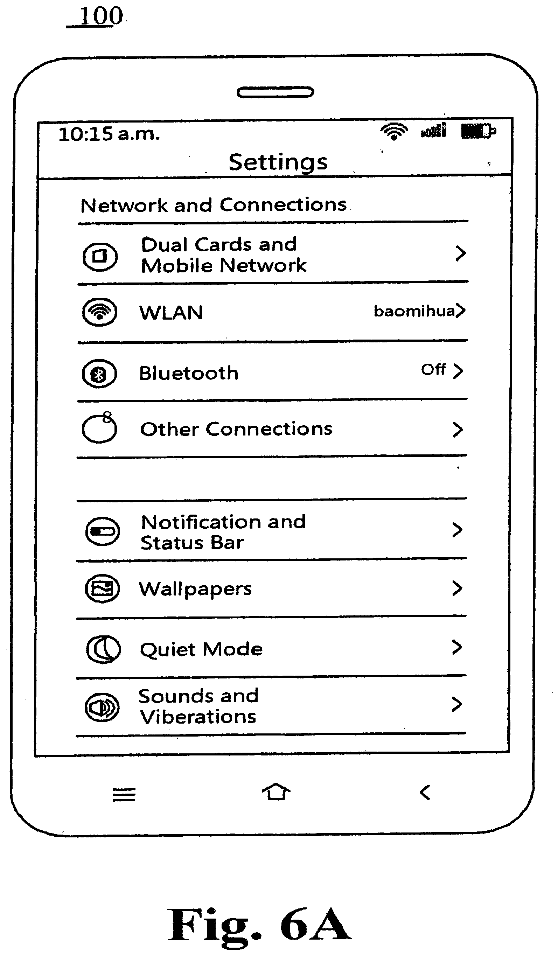

FIGs. 6A-6D are schematic diagrams illustrating interfaces of a smart terminal device in applying the method according to the embodiment of FIG. 5.

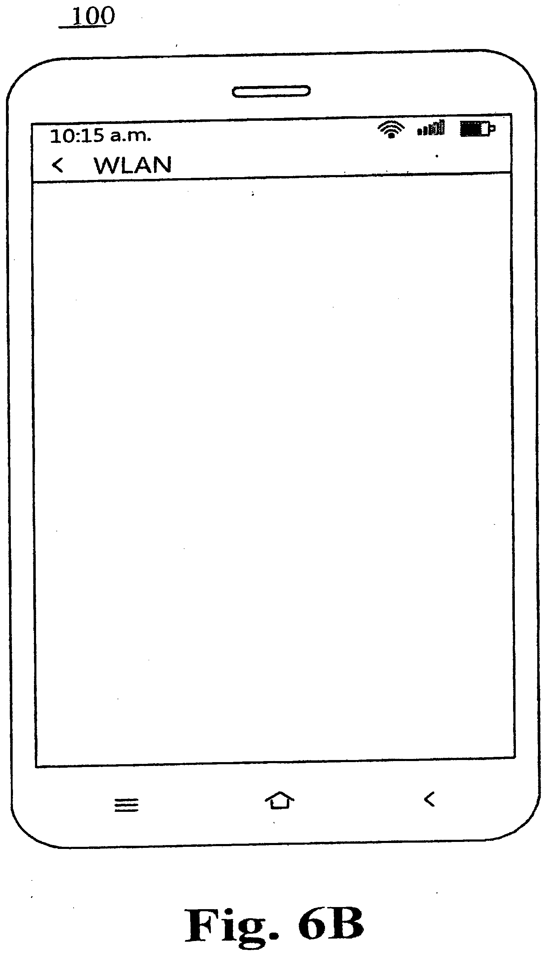

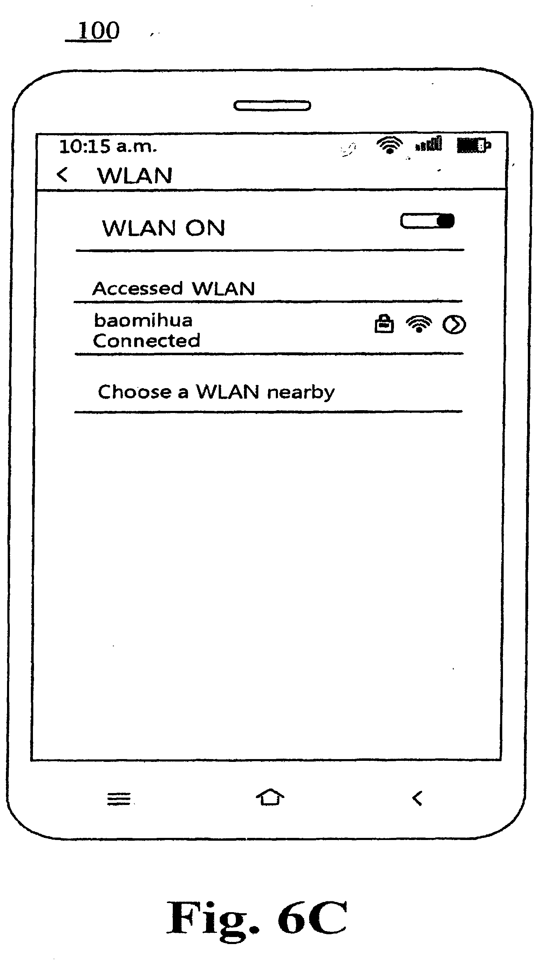

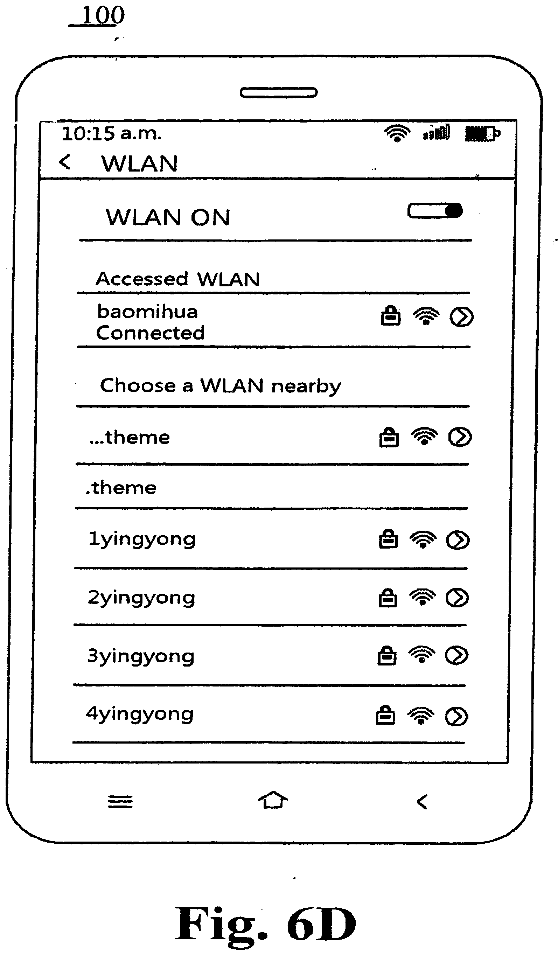

Firstly, a current display interface of the target application is as shown in FIG. 6A. When an option of "WLAN" is clicked by a user, a lite interface is firstly generated by the smart terminal device 100 during generation of the target display interface and, as shown in FIG. 6B, the current display interface is switched to the lite interface via a transition animation. When the lite interface is displayed, an intermediate interface can be generated based on loaded part of interface data before the target display interface is generated and, as shown in FIG. 6C, is substituted for the lite interface. When the target display interface is generated, the intermediate interface is then switched to the target display interface, as shown in FIG. 6D.

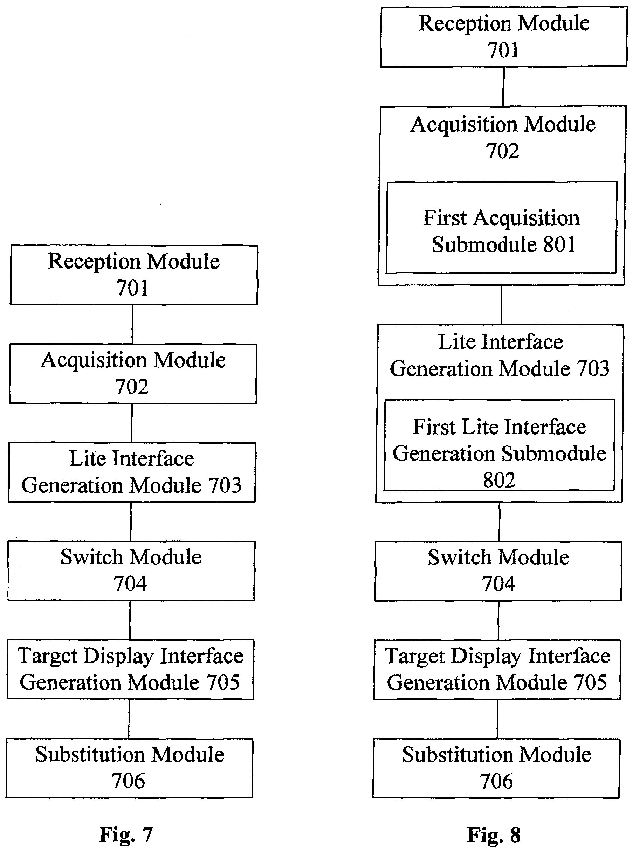

FIG. 7 is a block diagram illustrating a device for switching application interfaces according to an exemplary embodiment. The device can be provided in a smart terminal device, for example, a smart cellphone, a tablet computer and the like, which can support operation systems such as Android™ and IOS™. As shown in FIG. 7, the device includes: a reception module 701 configured to receive an interface switching request with respect to a target application, which can be used to request the target application to be switched from a current display interface to a target display interface; an acquisition module 702 configured to acquire first interface data for generating the target display interface in response to the interface switching request; a lite interface generation module 703 configured to generate a lite interface during acquisition of the first interface data; a switch module 704 configured to switch from the current display interface to the lite interface through a preset transition animation during acquisition of the first interface data; a target display interface generation module 705 configured to generate the target display interface based on the first interface data when the first interface data is acquired completely; and a substitution module 706 configured to substitute the target display interface for the lite interface.

FIG. 8 is a block diagram illustrating a device for switching application interfaces according to another exemplary embodiment. The device can be provided in a smart terminal device, for example, a smart cellphone, a tablet computer and the like, which can support operation systems such as Android™ and IOS™. As shown in FIG. 8, the acquisition module 702 includes a first acquisition submodule 801 configured to acquire, with high priority, data related to a theme of the target display interface among the first interface data. In addition, the lite interface generation module 703 includes a first lite interface generation submodule 802 configured to generate the lite interface based on the acquired data related to the theme of the target display interface.

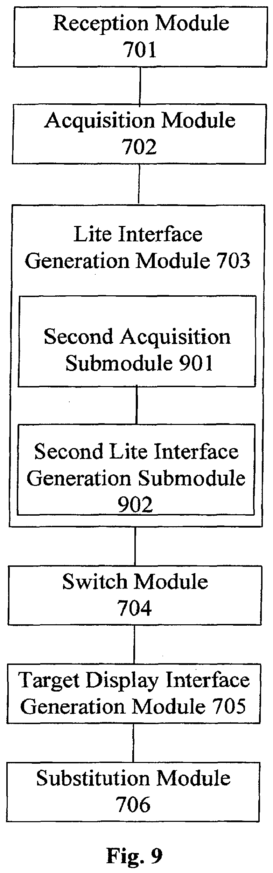

FIG. 9 is a block diagram illustrating a device for switching application interfaces according to another exemplary embodiment. The device can be provided in a smart terminal device, for example, a smart cellphone, a tablet computer and the like, which can support operation systems such as Android™ and IOS™. As shown in FIG. 9, the lite interface generation module 703 includes a second acquisition submodule 901 configured to acquire a configuration file with respect to the target application, which may be provided therein with preset second interface data; and a second lite interface generation submodule 902 configured to generate the lite interface based on the second interface data in the configuration file.

In an embodiment, the second acquisition submodule 901 is configured to acquire the configuration file corresponding to a latest version of the target application.

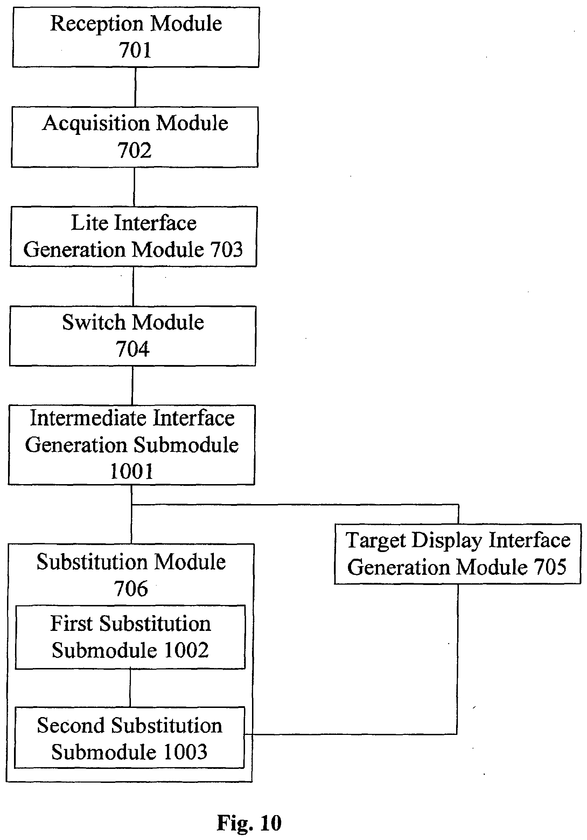

FIG. 10 is a block diagram illustrating a device for switching application interfaces according to another exemplary embodiment. The device can be provided in a smart terminal device, for example, a smart cellphone, a tablet computer and the like, which can support operation systems such as Android™ and IOS™. As shown in FIG. 10, the device further includes: an intermediate interface generation submodule 1001 configured to generate an intermediate interface based on acquired part of the first interface data, during the acquisition of the first interface data, after switching to the lite interface. In addition, the substitution module 706 includes a first substitution submodule 1002 configured to substitute the intermediate interface for the lite interface; and a second substitution submodule 1003 configured to substitute the target display interface for the intermediate interface when the target display interface is generated.

With regard to the devices in the foregoing embodiments, detailed description of specific modes for conducting operation of modules has been made in the embodiments related to the method, no detailed illustration will be made herein.

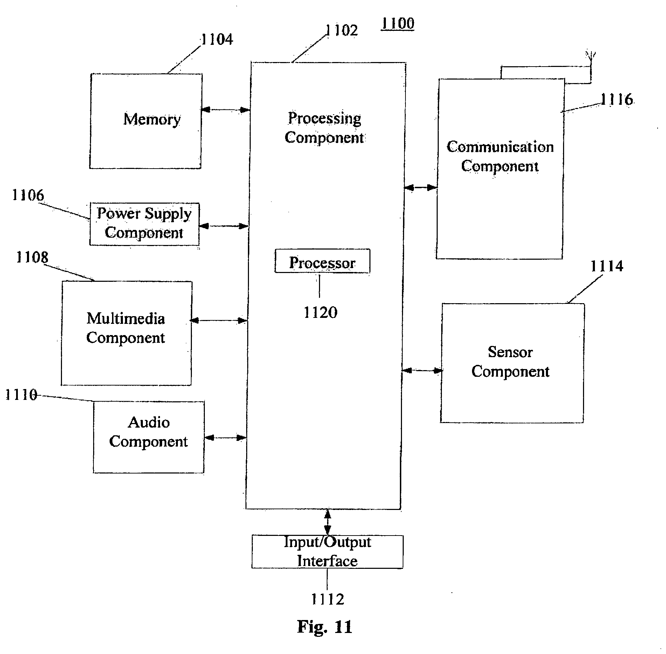

FIG. 11 is a block diagram applicable to an apparatus 1100 for switching application interfaces according to an exemplary embodiment. For example, the apparatus 1100 may be a mobile telephone, a computer, a digital broadcasting terminal, a message transceiver, a game control center, a tablet device, a medical device, a fitness device, a personal digital assistant and so on.

Referring to FIG. 11, the apparatus 1100 may include one or more components as below: a processing component 1102, a memory 1104, a power supply component 1106, a multimedia component 1108, an audio component 1110, an input/output (I/O) interface 1112, a sensor component 1114 and a communication component 1116.

The processing component 1102 usually controls the overall operation of the apparatus 1100 such as operations relating to display, making call, data communication, taking photos and recording. The processing component 1102 may include one or more processors 1120 to execute instructions to finish all or part steps of the above method. Besides, the processing component 1102 may include one or more modules for facilitating the interaction between the processing component 1102 and other components. For example, the processing component 1102 may include a multimedia module to facilitate the interaction between the multimedia component 1108 and the processing component 1102.

The memory 1104 is configured to store various types of data to support the operation at the apparatus 1100. Examples of the data include any instructions for performing applications or methods at the apparatus 1100, contact data, phone book data, a message, a picture and a video and so on. The memory 1104 may be any types of volatile or non-volatile storage devices or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or compact disk.

The power supply component 1106 provides power for components of the apparatus 1100. The power supply component 1106 may include a power management system, one or more power supplies, and other related components for generating, managing and distributing power for the apparatus 1100.

The multimedia component 1108 includes a screen which provides an output interface between the apparatus 1100 and the user. In some embodiments, the screen may include a liquid crystal display (LCD) and a touch panel (TP). If the screen includes a touch panel, the screen may be realized to be a touch screen to receive an input signal from the user. The touch panel includes one or more touch sensors to sense touch, slide and gestures on the touch panel. The touch sensor may not only sense the touch or slide boundary, but also detect the duration time and pressure of the touch or slide operation. In some embodiments, the multimedia component 1108 includes a front-facing camera and/or a rear-facing camera. When the apparatus 1100 is in an operation mode, such as a photo mode or video mode, the front-facing camera and/or the rear-facing camera may receive external multimedia data. Each front-facing camera and rear-facing camera may be a fixed optical lens system or have the focal length and optical zoom ability.

The audio component 1110 is configured to output and/or input an audio signal. For example, the audio component 1110 includes a microphone (MIC); when the apparatus 1100 is in an operation mode such as a call mode, a record mode and a speech recognition mode, the microphone is configured to receive an external audio signal. The received audio signal may be further stored in the memory 1104 or sent out by the communication component 1116. In some embodiments, the audio component 1110 may further include a loudspeaker for outputting the audio signal.

The I/O interface 1112 may provide interface between the processing component 1102 and a peripheral interface module. The peripheral interface module may be a keyboard, a click wheel, a button and so on. These buttons include but are not limited to: a homepage button, a volume button, a start button and a lock button.

The sensor component 1114 includes one or more sensors for evaluating states of different aspects of the apparatus 1100. For example, the sensor component 1114 may detect the on/off state of the apparatus 1100, relative locations of components, for example, the components are the displayer and keypads of the apparatus 1100. The sensor component 1114 may further sense the position change of a component of the apparatus 1100 or the position change of the apparatus 1100, whether the touch exists between the user and the apparatus 1100, the direction or acceleration/deceleration of the apparatus 1100, and temperature change of the apparatus 1100. The sensor component 1114 may include a proximity sensor which is configured to sense the existence of a nearby object when no physical contact exists. The sensor component 1114 may further include a light sensor such as a CMOS or CCD image sensor, for using in imaging applications. In some embodiments, the sensor component 1114 may further include an acceleration sensor, a gyro sensor, a magnetic sensor, a pressure sensor, or a temperature sensor.

The communication component 1116 is configured to facilitate communicating between the apparatus 1100 and other devices in wired or wireless manner. The apparatus 1100 may be connected to wireless network based on communication standard such as wireless fidelity (Wi-Fi), 2G or 3G or their combinations. In an exemplary embodiment, the communication component 1116 receives, by means of a broadcast channel, a broadcast signal or broadcast-related information from an external broadcast management system. In an exemplary embodiment, the communication component 1116 further includes a near field communication (NFC) module to promote short-range communication. For example, the NFC module may be achieved based on radio frequency identification (RFID) technology, infrared data association (IrDA) technology, ultra-wide bandwidth (UWB) technology, Bluetooth (BT) technology and other technologies.

In exemplary embodiments, the apparatus 1100 may be achieved by one or more of application specific integrated circuit (ASIC), digital signal processor (DSP), digital signal processing device (DSPD), programmable logic device (PLD), field programmable gate array (FPGA), controller, microcontroller, microprocessor or other electronic components for executing the method above.

In exemplary embodiments, a non-transitory computer-readable storage medium including an instruction is also provided, for example, the memory 1104 including the instruction. The instruction may be executed by the processor 1120 of the apparatus 1100 to achieve the above method for switching application interfaces. For example, the non-transitory computer-readable storage medium may be a ROM, a random access memory (RAM), a CD-ROM, a magnetic tape, a floppy disk and optical data storage device, etc.

## Claims

1. A method for switching application interfaces, comprising:
receiving (S101, S501) an interface switching request with respect to a target application, the interface switching request being used to request the target application to be switched from a current display interface to a target display interface;
acquiring (S102, S502) first interface data for generating the target display interface in response to the interface switching request;
generating (S103, S503) a lite interface and switching (S104, S504) from the current display interface to the lite interface through a preset transition animation during acquisition of the first interface data;
generating (S105, S507) the target display interface based on the first interface data when the first interface data is acquired completely; and
substituting (S106) the target display interface for the lite interface.

2. The method as claimed in claim 1, wherein the acquiring first interface data for generating the target display interface comprises:
acquiring, with high priority, data related to a theme of the target display interface among the first interface data.

3. The method as claimed in claim 1 or 2, wherein the generating a lite interface comprises:
generating the lite interface based on the acquired data related to the theme of the target display interface.

4. The method as claimed in any one of the preceding claims, wherein the generating a lite interface comprises:
acquiring (S401) a configuration file with respect to the target application, the configuration file comprising preset second interface data; and
generating (S402) the lite interface based on the second interface data in the configuration file.

5. The method as claimed in any one of claims 1-4, further comprising:
generating (S505) an intermediate interface based on acquired part of the first interface data, during the acquisition of the first interface data, after switching to the lite interface;
the substituting the target display interface for the lite interface comprises:
substituting (S506) the intermediate interface for the lite interface; and
substituting (S508) the target display interface for the intermediate interface when the target display interface is generated.

6. A device for switching application interfaces, comprising:
a reception module (701) configured to receive an interface switching request with respect to a target application, the interface switching request being used to request the target application to be switched from a current display interface to a target display interface;
an acquisition module (702) configured to acquire first interface data for generating the target display interface in response to the interface switching request;
a lite interface generation module (703) configured to generate a lite interface during acquisition of the first interface data;
a switch module (704) configured to switch from the current display interface to the lite interface through a preset transition animation during the acquisition of the first interface data;
a target display interface generation module (705) configured to generate the target display interface based on the first interface data when the first interface data is acquired completely; and
a substitution module (706) configured to substitute the target display interface for the lite interface.

7. The device as claimed in claim 6, wherein the acquisition module comprises:
a first acquisition submodule (801) configured to acquire, with high priority, data related to a theme of the target display interface among the first interface data.

8. The device as claimed in claim 6 or 7, wherein the lite interface generation module comprises:
a first lite interface generation submodule (802) configured to generate the lite interface based on the acquired data related to the theme of the target display interface.

9. The device as claimed in any one of claims 6-8, wherein the lite interface generation module comprises:
a second acquisition submodule (901) configured to acquire a configuration file with respect to the target application, the configuration file comprising preset second interface data; and
a second lite interface generation submodule (902) configured to generate the lite interface based on the second interface data in the configuration file.

10. The device as claimed in any one of claims 6-9, further comprising:
an intermediate interface generation submodule (1001) configured to generate an intermediate interface based on acquired part of the first interface data, during the acquisition of the first interface data, after switching to the lite interface;
the substitution module comprises:
a first substitution submodule (1002) configured to substitute the intermediate interface for the lite interface; and
a second substitution submodule (1003) configured to substitute the target display interface for the intermediate interface when the target display interface is generated.

11. A program product having stored therein instructions that, when executed by one or more processors of a terminal device, causes the terminal device to perform a method according to any one of claims 1 - 5.

12. A computer program, which when executing on a processor, performs a method according to any one of claims 1 to 5.
